# EUROPEAN PATENT APPLICATION

(11) **EP 4 230 329 A1**
(43) Date of publication of application: **23.08.2023**
(21) Application number: 23157072.2
(22) Date of filing: 16.02.2023
(51) Int. Cl.: B22F 10/28, B22F 10/60, B22F 10/62, B33Y 40/20, B29C 64/35, B33Y 10/00, B33Y 80/00, C25F 3/16, C25F 7/00, B22F 5/10

(54) **IN-SITU ELECTROCHEMICAL POLISHING OF ADDITIVELY MANUFACTURED PARTS**

(30) Priority: 18.02.2022 US 202217675467
(71) Applicant: Hamilton Sundstrand Corporation, Charlotte, NC 28217-4578 (US)
(72) Inventor: COOGAN, Cody, Columbiana, 35051 (US); KARLEN, Eric, Rockford, 61114 (US)
(74) Representative: Dehns

(57) **Abstract**

An additively manufactured intermediate part includes a body (202) and at least one sacrificial electrode (204) formed within or upon the body. The body includes a plurality of layers (206) and at least one surface (208) having a region to be smoothed in a near-finished state of the additively manufactured intermediate part. The at least one sacrificial electrode is adjacent to the body along the at least one surface, such that at least one of the plurality of layers is adjacent to the at least one sacrificial electrode in the region to be smoothed in the near-finished state of the additively manufactured intermediate part.

## Description

### BACKGROUND

The present disclosure relates generally to additive manufacturing and more particularly to enhancing the surface finish of additively manufactured parts by electrochemical polishing (or "electropolishing").

Additive manufacturing provides a variety of advantages over other manufacturing techniques. Additively manufactured parts can be built to incorporate complex internal or external features which would otherwise require difficult machining to achieve. However, many additive manufacturing techniques can result in parts with considerable surface roughness. This surface roughness can pose significant challenges to both the finishing of the part and the performance of the part during use. Surface roughness can cause problems such as increased fatigue within the part or increased flow turbulence about the part. Additionally, rougher surfaces can cause anodization or other chemical treatments to be less effective.

### SUMMARY

According to one aspect, an additively manufactured intermediate part includes a body and at least one sacrificial electrode formed within or upon the body. The body includes a plurality of layers and at least one surface having a region to be smoothed in a near-finished state of the additively manufactured intermediate part. The at least one sacrificial electrode is adjacent to the body along the at least one surface, such that at least one of the plurality of layers is adjacent to the at least one sacrificial electrode in the region to be smoothed in the near-finished state of the additively manufactured intermediate part.

According to another aspect, a method of manufacturing a part includes additively manufacturing the part. The part includes a body and at least one sacrificial electrode formed within or upon the body. The body includes a plurality of layers and at least one surface having a region to be smoothed in a near-finished state of the additively manufactured intermediate part. The at least one sacrificial electrode is adjacent to the body along the at least one surface, such that at least one of the plurality of layers is adjacent to the at least one sacrificial electrode in the region to be smoothed in the near-finished state of the additively manufactured intermediate part. The at least one sacrificial electrode is utilized to electrochemically polish the region of the at least one surface of the body. The at least one sacrificial electrode is removed from the body. At least one finishing process is performed on the body.

### BRIEF DESCRIPTION OF THE DRAWINGS

The subject matter, which is regarded as the disclosure, is particularly pointed out and distinctly claimed in the claims at the conclusion of the specification. The following descriptions of the drawings should not be considered limiting in any way.
FIG. 1 is a flow chart depicting a method of manufacturing a part including a sacrificial electrode.
FIG. 2A is a perspective illustration of an additively manufactured part with an internal sacrificial electrode.
FIG. 2B is a cross-sectional view of the additively manufactured part of FIG. 2A.
FIG. 3A is a perspective illustration of the additively manufactured part of FIG. 2A with the internal sacrificial electrode removed.
FIG. 3B is a cross-sectional view of the additively manufactured part of FIG. 3A.
FIG. 4A is a perspective illustration of an additively manufactured part with an external sacrificial shell electrode.
FIG. 4B is a cross-sectional view of the additively manufactured part of FIG. 4A.
FIG. 5 is a perspective illustration of an additively manufactured part with an external sacrificial electrode screen.

### DETAILED DESCRIPTION

Co-building a sacrificial electrode with an additively manufactured part can decrease surface roughness of the part. Sacrificial electrodes can be formed integrally within an intermediate part (such as within internal passages) or on the surface of the part during manufacture. These sacrificial electrodes can then be removed by a variety of processes, such as selectively dissolving the electrodes or reversing the electrodes' polarity.

As used in the present disclosure, "co-building" should be understood to refer to the process of additively manufacturing both a body of a part and a sacrificial electrode within or on the body. In this way, the body and the sacrificial electrode are built concurrently and can form an intermediate structure before the part is in a near-finished state. As described in further detail below, the sacrificial electrode can be built of the same material as the body or a different material.

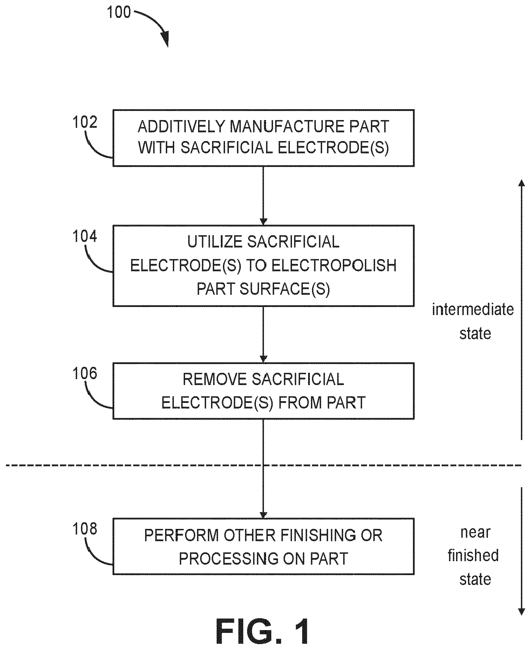

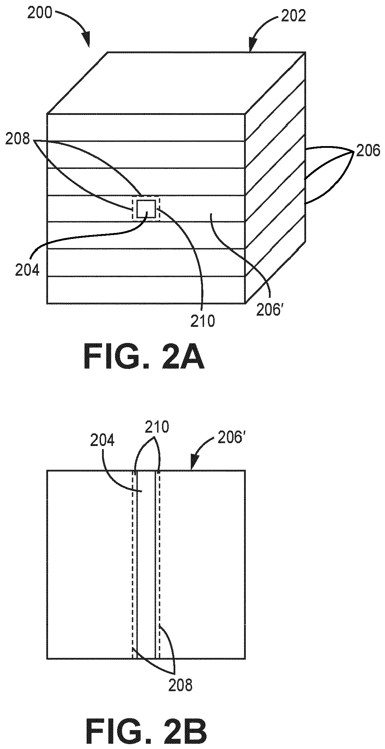

FIG. 1 is a flow chart depicting method 100 of manufacturing a part, such as parts 200, 300, 400 (described below in reference to FIGS. 2A-3B, 4A-4B, and 5, respectively). Method 100 includes steps 102-108. The part is in an intermediate state during steps 102-106, and is in a near-finished state during step 108.

In step 102, a part such as parts 200, 300, 400 is additively manufactured. The part can include a body which is monolithically built with one or more co-built sacrificial electrodes, such as sacrificial electrode 204, sacrificial shell electrode 304, or sacrificial electrode screen 404. The one or more sacrificial electrodes are integrated into the body of the part during manufacture, e.g. by deposition therewith during fabrication. The one or more sacrificial electrodes are separated from the body of the part in order to preserve electrical isolation (allowing the electropolishing in step 104 to take place) and prevent electrical shorts. The sacrificial electrode(s) can be separated from the body by an air gap, a layer of a non-conductive material such as polyvinyl chloride, or other suitable means. The choice of separation means can be selected based on the geometry of the body and the surface to be electropolished. For example, the use of a non-conductive layer applied to a surface of the body can allow the sacrificial electrode to conform to that surface. The surface can be an interior cavity or passage, or part of an external surface. The sacrificial electrode(s) can be designed to be sacrificial and can be removed during step 106. The additive manufacturing of the part, including co-built sacrificial electrode(s), can take place through powder bed fusion or other suitable metallic additive manufacturing processes. An additive manufacturing process can be selected based on, for example, whether both the body of the part and the sacrificial electrode(s) are formed of the same material or are formed of two different materials. For example, the body of the part can be formed of aluminum and the sacrificial electrode(s) can be formed of iron.

In step 104, the sacrificial electrode(s) can be used to electropolish the surface of the body to which each sacrificial electrode is co-built. The electropolishing process chemically smooths the surface of the body by utilizing a difference in electric charge between the surface and the sacrificial electrode(s). Electropolishing requires that an electrode be placed in proximity to the region of the surface which is intended to be smoothed. Co-building the sacrificial electrode(s) with the body allows the electropolishing of areas into which an electrode would not be able to be inserted after the part is built by placing the sacrificial electrode(s) adjacent to the region to be smoothed during the additive manufacturing process. The co-building of the sacrificial electrode(s) with the body of the part in step 102 can increase surface smoothness of the surface to which each sacrificial electrode conforms, which can have the additional benefit of increasing the efficiency of the electropolishing process. The body can be formed of a material which can be electropolished, such as aluminum, stainless steel, titanium, or other suitable materials.

In step 106, the one or more sacrificial electrodes are removed from the body of the part. In one exemplary removal process, the sacrificial electrode(s) can be removed through polarity reversal of the sacrificial electrode(s). In another exemplary removal process, the sacrificial electrode(s) can be removed through selective dissolution of the sacrificial electrode(s).

To remove the sacrificial electrode(s), the polarity of the sacrificial electrode(s) can be reversed such that it becomes the sacrificial anode. This allows the sacrificial electrode(s) to be removed from the part. Reversing the polarity of the sacrificial electrode(s) allows for the dissolution of the sacrificial electrode(s) in a similar manner to the electropolishing of the surface in step 104. Polarity reversal of the sacrificial electrode can be implemented when, for example, the body is formed of the same material as the sacrificial electrode(s).

Alternatively, the sacrificial electrode(s) can be selectively dissolved and thereby removed from the part. This can be performed by, for example, applying a selective dissolution agent which will preferentially attack the sacrificial electrode(s). The sacrificial electrode(s) can be selectively dissolved by applying the selective dissolution agent, which can be an acid or a base. The selective dissolution agent can be selected based on the materials which make up both the body and the sacrificial electrode(s). Selective dissolution of the sacrificial electrode(s) can be implemented when, for example, the body of the part is formed of a different material than the sacrificial electrode(s). For example, if the body of the part is formed of aluminum, and each sacrificial electrode is formed of iron, nitric acid can be used to selectively dissolve the sacrificial electrode(s) without dissolving the body. Conversely, if the body is formed of iron and each sacrificial electrode is formed of aluminum, a base can be used to selectively dissolve the sacrificial electrode(s) without dissolving the body. The application of an acid can also serve to prepare surfaces of the body for additional finishing procedures (described below in step 108).

In step 108, other finishing or processing procedures can be performed on the part. As described above in reference to step 106, the selective dissolution of the sacrificial electrode through the application of an acid can also serve to prepare the surface for the finishing processes in step 108 by creating an activated surface, which is required for certain finishing procedures. These finishing procedures can include, for example, electroplating, anodizing, or other suitable procedures. In step 108, the surface of the part can have a protective coating applied. The part is in a near-finished state in step 108, and the region of the surface which was adjacent to the sacrificial electrode(s) has been smoothed.

FIG. 2A is a perspective illustration of part 200 in an intermediate state. Part 200 includes body 202 and sacrificial electrode 204. Body 202 includes layers 206, surfaces 208, and air gap 210. FIG. 2B is a cross-sectional view of part 200, taken along selected layer 206', in the intermediate state. FIGS. 2A-2B will be discussed concurrently.

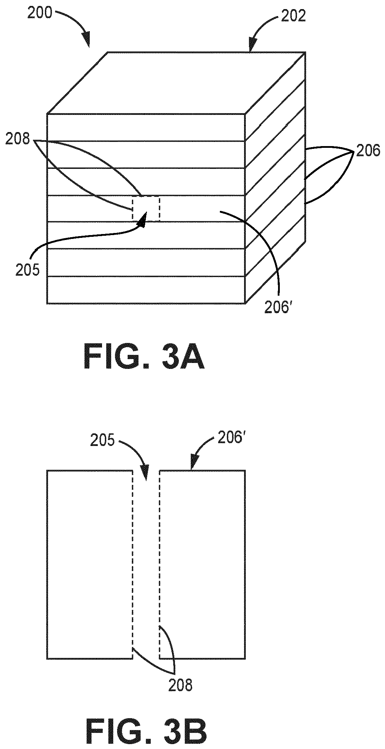

Part 200 is additively manufactured through a suitable manufacturing process, as discussed above in reference to FIG. 1. Body 202 forms the portion of the part which will remain in the near-finished state. The shape of body 202 can be determined by the intended use of part 200. In the example depicted in FIG. 2A-2B, sacrificial electrode 204 has been built within body 202 such that sacrificial electrode 204 is within selected layer 206' of layers 206. Sacrificial electrode 204 can be built at substantially the same time as the rest of selected layer 206'. In the example depicted in FIGS. 2A-2B, surfaces 208 are internal surfaces of body 202. One or more of surfaces 208 can contain a region which is intended to be smoothed when part 200 is in the near-finished state, and at least one of layers 206 can be adjacent to sacrificial electrode 204 in the region to be smoothed in the near-finished state. Air gap 210 separates sacrificial electrode 204 from surfaces 208 in order to electrically isolate sacrificial electrode 204 from body 202. In the example depicted in FIGS. 2A-2B, the region to be smoothed is the entirety of surfaces 208, and the layers 206 which surround internal passage 205 (shown in FIGS. 3A-3B) surround sacrificial electrode 204. Air gap 210 is in contact with layers 206 at surfaces 208, allowing sacrificial electrode 204 to be used for electropolishing of surfaces 208 (as described in step 104 of FIG. 1). Sacrificial electrode 204 can be built along a planned pathway for an internal cavity within body 202, and can be built in a shape and path which conforms to that planned pathway. For example, sacrificial electrode 204 can be built along the pathway of internal passage 205 (shown in FIGS. 3A-3B). Sacrificial electrode 204 can fill some or substantially all of the space within an internal cavity of body 202. In some examples, sacrificial electrode 204 can be built within multiple layers 206, have a varying cross-sectional diameter and/or shape, and/or be built such that it is adjacent to fewer or more surfaces 208 than the example depicted in FIGS. 2A-2B. Sacrificial electrode 204 can have a shape which is a substantially straight line, a curved line, a coil shape, or other possible shapes desired for specific applications. In some examples, multiple sacrificial electrodes 204 can be built along the planned pathway of one or more internal cavities within body 202.

FIG. 3A is a perspective illustration of part 200 in a near-finished state. Part 200 includes body 202 and internal passage 205. Body 202 includes layers 206 and surfaces 208. FIG. 3B is a cross-sectional view of part 200, taken along selected layer 206', in the near-finished state. FIGS. 3A-3B will be discussed concurrently.

Part 200 as shown in FIGS. 3A-3B has had sacrificial electrode 204 (shown in FIGS. 2A-2B) removed from body 202. As described above in reference to step 106 of method 100 (shown in FIG. 1), sacrificial electrode 204 can be removed from body 202 through polarity reversal or selective dissolution. Internal passage 205 is formed by the removal of sacrificial electrode 204 from within body 202. In the example shown in FIGS. 3A-3B, surfaces 208 define internal passage 205 through body 202 and along selected layer 206'.

Part 200 is in the intermediate state, shown in FIGS. 2A-2B, during steps 102-106 of method 100 (described above in reference to FIG. 1). Part 200 is in the near-finished state, shown in FIGS. 3A-3B, during step 108 of method 100.

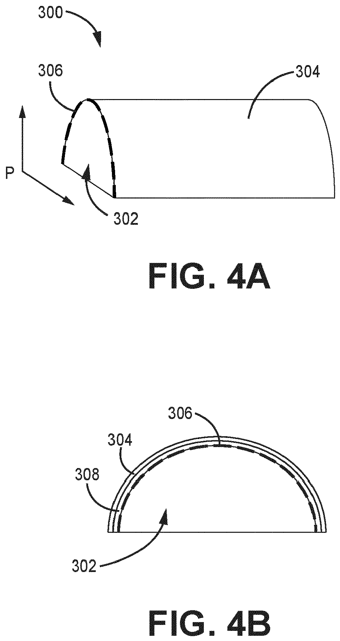

FIG. 4A is a perspective illustration of part 300 in an intermediate state. Part 300 includes body 302 and sacrificial shell electrode 304. Body 302 includes surface 306 and non-conductive layer 308. FIG. 4B is a cross-sectional view of part 300, taken parallel to plane P, in the intermediate state. FIGS. 4A-4B will be discussed concurrently.

Body 302 forms the portion of part 300 which will remain in the near-finished state (once sacrificial shell electrode 304 has been removed from surface 306). The shape of body 302 can be determined by the intended use of part 300. In the example depicted in FIGS. 4A-4B, sacrificial shell electrode 304 has been co-built with body 302 such that sacrificial shell electrode 304 is formed adjacent to surface 306. Non-conductive layer 308 separates sacrificial shell electrode 304 from surface 306 and electrically isolates sacrificial shell electrode 304 from body 302. Sacrificial shell electrode 304 is external to body 302 and is conformal to body 302 along non-conductive layer 308. In some examples, sacrificial shell electrode 304 can cover all external surfaces of body 302 or can be built on a selected region or regions of body 302. These regions can be selected based on desired use of part 300, the desired surface finish of some or all of part 300, the difficulty of machining surface 306, and/or other applicable considerations. In the example depicted in FIGS. 4A-4B, surface 306 is an external surface of body 302.

Part 300 can be manufactured in a similar manner to part 200 (described above in reference to FIGS. 2A-3B). Body 302 is additively manufactured and comprised of layers (not labeled in the example depicted in FIGS. 4A-4B). Sacrificial shell electrode 304 can operate in a substantially similar manner to sacrificial electrode 204 (described above in reference to FIGS. 2A-2B). Sacrificial shell electrode 304 can be used to electropolish surface 306 and can be removed through polarity reversal or selective dissolution (as described in step 106, shown in FIG. 1).

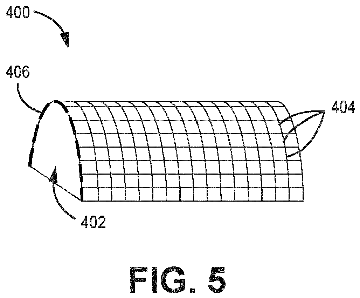

FIG. 5 is a perspective illustration of part 400 in an intermediate state. Part 400 includes body 402 and sacrificial electrode screen 404. Body 402 includes surface 406.

Body 402 forms the portion of part 400 which will remain in the near-finished state (once sacrificial electrode screen 404 has been removed from surface 406). Body 402 is additively manufactured and comprised of layers (not labeled in the example depicted in FIG. 5). The shape of body 402 can be determined by the intended use of part 400. In the example depicted in FIG. 5, sacrificial electrode screen 404 has been co-built with body 402 such that sacrificial electrode screen 404 is conformal with surface 406. Sacrificial electrode screen 404 can be separated from surface 406 by a non-conductive layer (not shown in FIG. 5). Sacrificial electrode screen 404 is external to body 402 and is conformal to body 402 along surface 406. In some examples, sacrificial electrode screen 404 can cover all external surfaces of body 402 or can be built on a selected region or regions of body 402. Sacrificial electrode screen 404 can form a repeating or non-repeating pattern on surface 406. In some examples, a plurality of sacrificial electrodes (similar to sacrificial electrode 204, shown in FIGS. 2A-2B) can be built on surface 406. In the example depicted in FIG. 5, surface 406 is an external surface of body 402.

Part 400 can be manufactured in a similar manner to part 200 (described above in reference to FIGS. 2A-3B). Sacrificial electrode screen 404 can operate in a substantially similar manner to sacrificial electrode 204 (described above in reference to FIGS. 2A-2B). Sacrificial electrode screen 404 can be used to electropolish surface 406 and can be removed through polarity reversal or selective dissolution (as described in step 106, shown in FIG. 1). The design and placement of sacrificial electrode screen 404 can be used to electropolish an entire surface, similar to sacrificial shell electrode 304 (described above in reference to FIGS. 3A-3B). Alternatively, the design and placement of sacrificial electrode screen 404 can be used to electropolish a selected region of a surface.

Parts 200, 300, 400 can be configured for use in a variety of contexts within an aircraft. For example, part 200 can be a part of a component which has internal cavities, such as pump housings, generator housings, or gearbox housings. Part 300 can be a part of a component for which a smooth surface finish is desirable, such as an impeller blade. Part 400 can be a part of a component for which a patterned or otherwise varied surface finished is desired, or can be used to electropolish an entire surface using less material than part 300 on a comparable surface.

Part smoothing through the use of a sacrificial electrode co-built in situ with an additively manufactured part provides numerous advantages. Decreasing surface roughness improves the mechanical performance of components and can decrease the fatigue experienced by the components during use. With respect to internal cavities or passages, a smoother surface finish can decrease the turbulence of fluid flow within or through the cavity/passage, and the disclosed method can be used in these areas which are difficult to machine. A smoother surface can make finishing or processing easier and more effective. As compared to insertion of an auxiliary electrode into an already-manufactured part, the method disclosed herein ensures conformality of the sacrificial electrode with the surface to which it is applied, and can therefore achieve more consistent and effective smoothing. This method decreases initial surface roughness and improves the efficiency of electropolishing and other processing methods. For similar reasons, the disclosed method can also achieve better results than would be possible by applying an electrode material applied to an already near-finished part.

### Discussion of Possible Embodiments

The following are non-exclusive descriptions of possible embodiments of the present invention.

An embodiment of an additively manufactured intermediate part includes a body and at least one sacrificial electrode formed within or upon the body. The body has a plurality of layers and at least one surface having a region to be smoothed in a near-finished state of the additively manufactured intermediate part. The at least one sacrificial electrode is adjacent to the body along the at least one surface, such that at least one of the plurality of layers is adjacent to the at least one sacrificial electrode in the region to be smoothed in the near-finished state of the additively manufactured intermediate part.

The additively manufactured intermediate part of the preceding paragraph can optionally include, additionally and/or alternatively, any one or more of the following features, configurations, and/or additional components:

An additively manufactured intermediate part includes a body and at least one sacrificial electrode formed within or upon the body. The body has a plurality of layers and at least one surface having a region to be smoothed in a near-finished state of the additively manufactured intermediate part. The at least one sacrificial electrode is adjacent to the body along the at least one surface, such that at least one of the plurality of layers is adjacent to the at least one sacrificial electrode in the region to be smoothed in the near-finished state of the additively manufactured intermediate part.

A further embodiment of the foregoing additively manufactured intermediate part, wherein the at least one sacrificial electrode is internal to the body.

A further embodiment of any of the foregoing additively manufactured intermediate parts, wherein the at least one sacrificial electrode has a shape which is selected from the group comprising: a straight line, a curved line, and a coil.

A further embodiment of any of the foregoing additively manufactured intermediate parts, wherein the at least one sacrificial electrode comprises a sacrificial shell electrode which conforms to an external surface of the body.

A further embodiment of any of the foregoing additively manufactured intermediate parts, wherein the sacrificial shell electrode covers a portion of the external surface of the body.

A further embodiment of any of the foregoing additively manufactured intermediate parts, wherein the at least one sacrificial electrode comprises a sacrificial electrode screen which conforms to an external surface of the body.

A further embodiment of any of the foregoing additively manufactured intermediate parts, wherein the body and the at least one sacrificial electrode are both formed of a material.

A further embodiment of any of the foregoing additively manufactured intermediate parts, wherein the body is formed of a first material. The at least one sacrificial electrode is formed of a second material which is different than the first material. The second material can be selectively dissolved.

A further embodiment of any of the foregoing additively manufactured intermediate parts, wherein the additively manufactured intermediate part is selected from the group comprising: a pump housing, a gearbox housing, a generator housing, an impeller, and components thereof.

A further embodiment of any of the foregoing additively manufactured intermediate parts, wherein the additively manufactured intermediate part is comprised of a material selected from the group comprising: aluminum, stainless steel, and titanium.

An embodiment of a method of manufacturing a part includes additively manufacturing the part. Additively manufacturing the part includes building a body and building at least one sacrificial electrode within or upon the body. The body comprises a plurality of layers and at least one surface having a region to be smoothed in a near-finished state of the part. The at least one sacrificial electrode is adjacent to the body along the at least one surface such that at least one of the plurality of layers is adjacent to the at least one sacrificial electrode in the region to be smoothed in the near-finished state of the part. The at least one sacrificial electrode is utilized to electrochemically polish the region of the at least one surface of the body. The at least one sacrificial electrode is removed from the body. At least one finishing process is performed on the body.

The additively manufactured intermediate part of the preceding paragraph can optionally include, additionally and/or alternatively, any one or more of the following features, configurations, and/or additional components:

A method of manufacturing a part includes additively manufacturing the part. Additively manufacturing the part includes building a body and building at least one sacrificial electrode within or upon the body. The body comprises a plurality of layers and at least one surface having a region to be smoothed in a near-finished state of the part. The at least one sacrificial electrode is adjacent to the body along the at least one surface such that at least one of the plurality of layers is adjacent to the at least one sacrificial electrode in the region to be smoothed in the near-finished state of the part. The at least one sacrificial electrode is utilized to electrochemically polish the region of the at least one surface of the body. The at least one sacrificial electrode is removed from the body. At least one finishing process is performed on the body.

A further embodiment of the foregoing method, wherein removing the at least one sacrificial electrode comprises selectively dissolving the at least one sacrificial electrode.

A further embodiment of any of the foregoing methods, wherein selectively dissolving the at least one sacrificial electrode comprises applying an acid to the part.

A further embodiment of any of the foregoing methods, wherein the acid is nitric acid.

A further embodiment of any of the foregoing methods, wherein selectively dissolving the at least one sacrificial electrode comprises applying a base to the part.

A further embodiment of any of the foregoing methods, wherein removing the at least one sacrificial electrode comprises reversing the polarity of the at least one sacrificial electrode.

A further embodiment of any of the foregoing methods, wherein additively manufacturing the part comprises using powder bed fusion.

A further embodiment of any of the foregoing methods, wherein removing the at least one sacrificial electrode comprises forming at least one internal cavity within the body.

A further embodiment of any of the foregoing methods, wherein the at least one internal cavity comprises at least one internal passage through the body.

A further embodiment of any of the foregoing methods, further comprising applying a non-conductive layer to the at least one surface of the body.

While the invention has been described with reference to an exemplary embodiment(s), it will be understood by those skilled in the art that various changes may be made without departing from the scope of the invention as defined by the claims. In addition, many modifications may be made to adapt a particular situation or material to the teachings of the invention without departing from the scope of the claims. Therefore, it is intended that the invention not be limited to the particular embodiment(s) disclosed, but that the invention will include all embodiments falling within the scope of the appended claims.

## Claims

1. An additively manufactured intermediate part, the additively manufactured intermediate part comprising:
a body (200) having a plurality of layers (206) and at least one surface (208) having a region to be smoothed in a near-finished state of the additively manufactured intermediate part; and
at least one sacrificial electrode (204) formed within or upon the body;
wherein the at least one sacrificial electrode is adjacent to the body along the at least one surface, such that at least one of the plurality of layers is adjacent to the at least one sacrificial electrode in the region to be smoothed in the near-finished state of the additively manufactured intermediate part.

2. The additively manufactured intermediate part of claim 1, wherein the at least one sacrificial electrode is internal to the body.

3. The additively manufactured intermediate part of claim 2, wherein the at least one sacrificial electrode has a shape which is selected from the group comprising: a straight line, a curved line, and a coil.

4. The additively manufactured intermediate part of claim 1, wherein the at least one sacrificial electrode comprises a sacrificial shell electrode which conforms to an external surface of the body, and optionally wherein the sacrificial shell electrode covers a portion of the external surface of the body.

5. The additively manufactured intermediate part of claim 1, wherein the at least one sacrificial electrode comprises a sacrificial electrode screen which conforms to an external surface of the body.

6. The additively manufactured intermediate part of any preceding claim, wherein:
the body is formed of a first material;
the at least one sacrificial electrode is formed of a second material which is different than the first material; and
the second material can be selectively dissolved.

7. The additively manufactured intermediate part of any preceding claim, wherein the additively manufactured intermediate part is selected from the group comprising: a pump housing, a gearbox housing, a generator housing, an impeller, and components thereof and/or wherein the additively manufactured intermediate part is comprised of a material selected from the group comprising: aluminum, stainless steel, and titanium.

8. A method of manufacturing a part, the method comprising:
additively manufacturing the part, wherein additively manufacturing the part comprises:
building a body, wherein the body comprises a plurality of layers and at least one surface having a region to be smoothed in a near-finished state of the part; and
building at least one sacrificial electrode within or upon the body, wherein the at least one sacrificial electrode is adjacent to the body along the at least one surface such that at least one of the plurality of layers is adjacent to the at least one sacrificial electrode in the region to be smoothed in the near-finished state of the part;
utilizing the at least one sacrificial electrode to electrochemically polish the region of the at least one surface of the body;
removing the at least one sacrificial electrode from the body; and
performing at least one finishing process on the body.

9. The method of claim 8, wherein removing the at least one sacrificial electrode comprises selectively dissolving the at least one sacrificial electrode.

10. The method of claim 9, wherein selectively dissolving the at least one sacrificial electrode comprises applying an acid to the part, and optionally wherein the acid is nitric acid.

11. The method of claim 9, wherein selectively dissolving the at least one sacrificial electrode comprises applying a base to the part.

12. The method of any of claims 8 to 11, wherein removing the at least one sacrificial electrode comprises reversing the polarity of the at least one sacrificial electrode.

13. The method of any of claims 8 to 12, wherein additively manufacturing the part comprises using powder bed fusion.

14. The method of any of claims 8 to 13, wherein removing the at least one sacrificial electrode comprises forming at least one internal cavity within the body, and optionally wherein the at least one internal cavity comprises at least one internal passage through the body.

15. The method of any of claims 8 to 14, further comprising applying a non-conductive layer to the at least one surface of the body.
